Europäisches Patentamt

European Patent Office

Office européen des brevets

(19)

(11) Veröffentlichungsnummer: **0 276 830**
**A1**

(12) # EUROPÄISCHE PATENTANMELDUNG

(21) Anmeldenummer: **88101167.0**

(51) Int. Cl.⁴: **F16B 47/00**

(22) Anmeldetag: **27.01.88**

(30) Priorität: **30.01.87 DE 8701460 U**

(43) Veröffentlichungstag der Anmeldung:
**03.08.88 Patentblatt 88/31**

(84) Benannte Vertragsstaaten:
**BE ES FR GB IT NL SE**

(71) Anmelder: **Schirnig, Joachim**
**Müssmattstrasse 53**
**D-7888 Rheinfelden(DE)**

(72) Erfinder: **Schirnig, Joachim**
**Müssmattstrasse 53**
**D-7888 Rheinfelden(DE)**

(74) Vertreter: **Blum, Rudolf Emil Ernst et al**
**c/o E. Blum & Co Patentanwälte Vorderberg**
**11**
**CH-8044 Zürich(CH)**

(54) **Haltevorrichtung mit Saugnapf.**

(57) Die Haltevorrichtung weist einen Saugnapf (1) und einen Magneten (2) auf. Im Saugnapf (1) ist der Magnet so angeordnet, dass dessen Magnetfeld zumindest in Richtung der Haltekraft des Saugnapfes wirkt. Durch die Zugkraft des Magnetfeldes wird zum Teil die Haftwirkung des Saugnapfes auf dem Blech unterstützt, wodurch ein Selbstaufrichten und Ablösen des Saugnapfes zumindest für lange Zeit verzögert oder verhindert werden kann.

Die Haltevorrichtung zur Befestigung auf glatten, magnetisierbaren Flächen, wie z.B. Stahl, insbesondere auf lackierten Stahlblechen von Fahrzeugen und Maschinen, dient beispielsweise zur Befestigung verkaufsfördernder Werbetafeln auf Dächern oder anderen Flächen von zum Verkauf stehender Autos.

Fig. 1

EP 0 276 830 A1

## Haltevorrichtung mit Saugnapf

Die Erfindung betrifft eine Haltevorrichtung gemäss dem Oberbegriff des Patentanspruches 1.

Haltevorrichtungen mit Saugnäpfen sind bekannt. Beispielsweise werden zwei solcher Haltevorrichtungen, mit jeweils einer Schraubenzugfeder als bewegliche Verbindung, oder einem Metallstab als starre Verbindung, so an einer Werbetafel befestigt, dass diese wie zwei Füsse wirken, auf denen die Werbetafel auf dem Autodach steht. Dabei soll die Werbetafel beim Aufstellen im Freien bei Windeinwirkung dauerhaft sicher stehen. Obwohl die Werbetafel leicht anzubringen ist, auf dem Autodach nicht verschoben werden kann und den Autolack schont, hat er jedoch den Nachteil, dass seine anfänglich hohe Haftkraft im Laufe der Zeit nachlässt, da durch das selbstaufrichten-Moment des Saugnapfes allmählich Luft durch winzige Spalte und Poren zwischen dem Saugrand des Napfes und der Lackoberfläche der Haftfläche gesaugt wird. Dadurch hebt sich der Saugnapf mehr und mehr von der Haftfläche ab und verliert seine Haftkraft. Bei der Verwendung der Haltevorrichtung mit Saugnapf zur Befestigung von Werbetafeln auf Autos kann dies zur Folge haben, dass die Werbetafeln durch Windeinwirkung umfallen und den Lack der Autos beschädigen.

Verschiedentlich wurde auch schon versucht, Werbetafeln, statt mit Saugnäpfen, mit Magneten auf Autodächern zu befestigen. Aber solche Magnete zerkratzen leicht den Autolack, denn ein Magnet kann versehentlich auf dem Autodach verschoben werden. Auch beim Anbringen und Abnehmen des Magneten auf dem Autodach können Beschädigungen des Lackes auftreten, da das Material des Magneten wesentlich härter als der Autolack ist. Eine Beschichtung des Magneten zum Schutz des Lackes würde jedoch die Haftkraft des Magneten stark verringern. Bei Windeinwirkung im Freien auf die Werbetafeln könnte es zum Umfallen dieser führen.

Der Erfindung liegt nun die Aufgabe zugrunde, eine Haltevorrichtung der eingangs genannten Art zu schaffen, die einfach anzubringen ist, und deren Haftwirkung lange Zeit bestehen bleibt, ohne dass ein Nachdrücken des Saugnapfes oder eine Saugpumpe erforderlich sind.

Die Lösung dieser Aufgabe besteht darin, dass der Saugnapf wenigstens einen, zumindest in Richtung der Haltekraft des Saugnapfes wirkenden, Magneten aufweist. Es ist von Vorteil, wenn die Zugwirkung des Magneten in Richtung der Haltekraft des Augnapfes gleich gross oder grösser ist als das selbstaufrichtende Moment des Saugnapfes. Dadurch wird erreicht, dass die Zugwirkung des Magnetfeldes auf das Stahlblech, z.B. des Autodaches, zum Teil die Haftwirkung des Saugnapfes auf dem Blech unterstützt, im wesentlichen aber ein Selbstaufrichten des Saugnapfes zumindest für lange Zeit verzögert oder verhindert.

Der Magnet muss somit nicht die eigentliche Haltekraft für die Haltevorrichtungaufbringen. Dadurch kann er entsprechend kleiner und kostengünstiger in der Herstellung sein. Der Vorteil der obengenannten Anordnung ist, dass die Haftwirkung der Haltevorrichtung auf Dauer erhalten bleibt, ohne dass ein Nachdrücken des Saugnapfes erforderlich ist.

Es ist zweckmässig, wenn der Magnet oberhalb der Saugöffnung und durch einen Abschnitt von dieser getrennt angeordnet ist. Der Abschnitt verhindert, dass der Magnet in direkten Kontakt mit der Oberfläche eines Autodaches bringbar ist und somit eine Beschädigung der Lackfläche in vorteilhafter Weise verhindert werden kann.

Ein weiteres Ausführungsbeispiel der Erfindung sieht vor, dass mindestens ein Durchgangsloch im Magneten vorhanden ist, das sich rechtwinklig zu den Polflächen erstreckt, um eine Verbindung zwischen den die Polflächen bedeckenden Abschnitten herzustellen.

Der Vorteil dieser Anordnung ist, dass zusätzliche Stege gebildet werden, die eine gleichmässigere Uebertragung der Kräfte vom Deckel zum Boden des Saugnapfes ermöglichen.

Ein anderes Ausführungsbeispiel der Erfindung sieht vor, dass die zweite Polfläche des am Boden des Saugnapfes befestigten Magneten freiliegt. Daraus ergibt sich der Vorteil, dass an dieser Fläche des Haltesystems weitere Teile mit magnetisierbaren Flächen, ohne Zuhilfenahme eines weiteren Befestigungssystems angebracht werden können.

Es ist zweckmässig, wenn der Saugnapf zwei Saugöffnungen aufweist, und wenn der Magnet zwischen den Saugöffnungen so angeordnet sind, dass die Polflächen des Magneten jeweils durch einen den Boden der Saugöffnung bildenden Abschnitt von dieser getrennt sind. Dadurch ist es möglich, die Haltevorrichtung gleichzeitig an zwei gegenüberliegenden magnetisierbaren Haftflächen dauerhaft zu befestigen.

Eine weitere Ausgestaltung der Erfindung sieht vor, dass am Saugnapfrand mindestens eine Lasche einstückig angeformt ist, die aus dem gleichen Material besteht. Am Ende der Lasche kann eine Verdickung angeformt sein, die das Ergreifen der Lasche mit den Fingern erleichtert. Durch das Hochziehen der Lasche, etwa senkrecht von der Haftfläche weg, wird der Saugnapf mit dem Magnet einseitig angehoben. Dadurch wird das Ablösen des Saugnapfes von der Haftfläche wesentlich erleichtert. Es können auch mehrere Laschen oder eine teilweise oder ganz umlaufende Lasche angebracht sein. Der Vorteil der Lasche ist, dass ein kraftaufwendiges "Wegreissen" zu Entfernen der Haltevorrichtung von der Haftfläche entfällt.

Im folgenden wird die Erfindung anhand der beiliegenden Zeichnungen erläutert.

Es zeigen

Fig. 1 einen Querschnitt eines Ausführungsbeispiels der erfindungsgemässen Haltevorrichtung;

Fig. 2 einen Querschnitt eines anderen Ausführungsbeispiels der erfindungsgemässen Haltevorrichtung im angewendeten Zustand;

Fig. 3 einen Querschnitt eines weiteren Ausführungsbeispiels der erfindungsgemässen Haltevorrichtung;

Fig. 4 einen Querschnitt eines anderen Ausführungsbeispiels der erfindungsgemässen Haltevorrichtung; und

Fig. 5 eine Draufsicht auf ein weiteres Ausführungsbeispiel der erfindungsgemässen Haltevorrichtung.

Die Haltevorrichtung besteht im wesentlichen aus einem Saugnapf 1 und einem Permanentmagneten 2. Der Saugnapf 1 besteht aus elastischem Kunststoff und weist eine Saugöffnung 4 auf. Der Magnet 2 ist oberhalb der Saugöffnung 4 durch einen den Boden der Saugöffnung 4 bildenden Abschnitt 3 von dieser getrennt angeordnet und allseitig vom Kunststoff umschlossen. Im Magneten 2 ist in der der Saugöffnung 4 gegenüberliegenden Seite ein Gewindeloch 5 ausgebildet, in das ein nicht dargestelltes Anschlussorgan eingeschraubt werden kann, um z.B. eine Werbetafel zu befestigen.

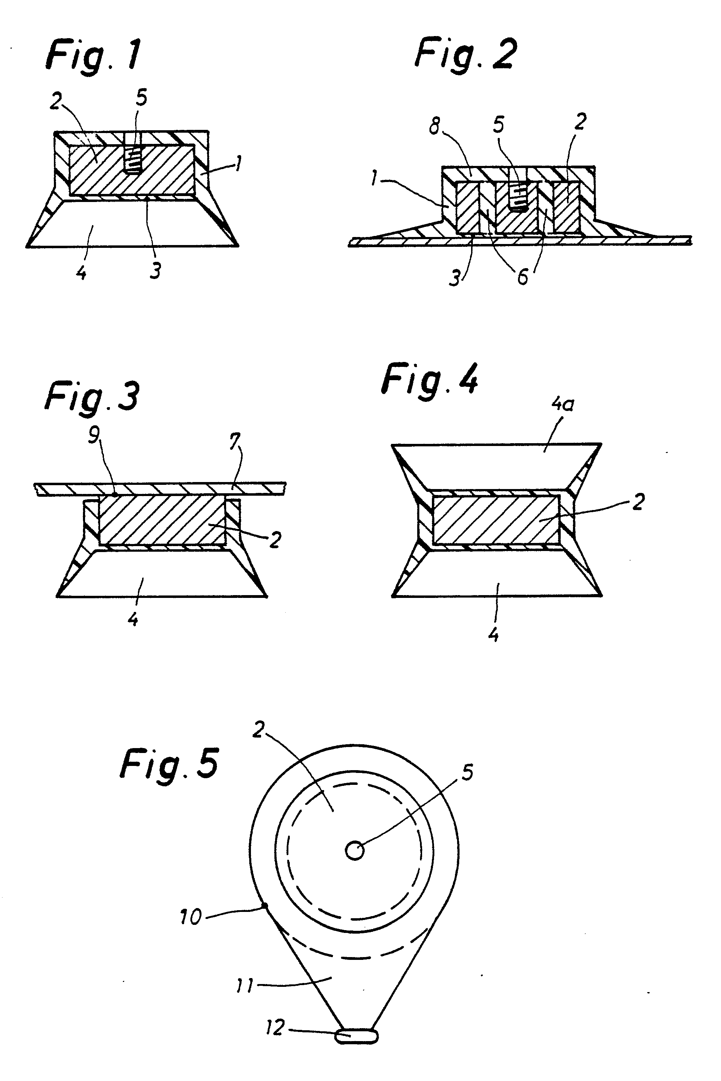

Gegenüber der in Fig. 1 dargestellten Haltevorrichtung weist beim Ausführungsbeispiel nach Fig. 2 der Permanentmagnet 2 zusätzlich zwei Durchgangslöcher 6 auf. Der Magnet 2 ist in den elastischen Kunststoff eingegossen, wodurch die Löcher 6 mit Kunststoff gefüllt und der den Boden bildende Abschnitt 3 und der den Magneten 2 abdeckende Abschnitt 8 miteinander verbunden werden.

Bei dem in Fig. 3 dargestellten Ausführungsbeispiel ist oberhalb des Saugnapfes 1 ein Abschnitt ausgebildet, der ein durch den den Boden des Saugnapfes bildenden Abschnitt 3 von der Saugöffnung 4 getrenntes, offenes Abteil bildet. In diesem Abteil ist der Magnet 2 so angeordnet, dass eine Polfläche 9 freiliegt. Der Magnet 2 ist in das Abteil eingeklebt.

Das in Fig. 4 dargestellte Ausführungsbeispiel weist zwei entgegengesetzt gerichtete Saugöffnungen 4, 4a auf, zwischen welchen Magnet 2 angeordnet ist, wobei der den Boden bildende Abschnitt der Saugöffnungen 4, 4a jeweils an einer Polfläche anliegt und der Magnet seitlich von elastischem Kunststoff umschlossen ist.

Beim Ausführungsbeispiel nach Fig. 5 ist am Rand 10 des Saugnapfes 1 eine Lasche 11 einstückig angeformt, um den Saugnapf besser abnehmen zu können. Um das Abnehmen weiter zu erleichtern, ist am freien Ende der Lasche 11 ein Abschnitt 12 angeformt, der als Griffteil dient.

**Ansprüche**

1. Haltevorrichtung mit Saugnapf zur Befestigung auf einer Fläche eines aus magnetisierbaren Material bestehenden Elementes, dadurch gekennzeichnet, dass im Saugnapf (1) wenigstens ein Magnet (2) so angeordnet ist, dass dessen Magnetfeld zumindest in Richtung der Haltekraft des Saugnapfes wirkt.

2. Haltevorrichtung nach Anspruch 1, dadurch gekennzeichnet, dass der Magnet (2) ein Permanentmagnet ist.

3. Haltevorrichtung nach einem der Ansprüche 1 oder 2, dadurch gekennzeichnet, dass eine Polfläche des Magneten als Auflagefläche der Saugöffnung (4) zugewandt und parallel zu dieser angeordnet ist.

4. Haltevorrichtung nach einem der Ansprüche 1 bis 3, dadurch gekennzeichnet, dass die Zugwirkung des Magneten (2) in Richtung der Haltekraft des Saugnapfes (1) gleich gross oder grösser ist als das selbstaufrichtende Moment des Saugnapfes (1).

5. Haltevorrichtung nach einem der Ansprüche 1 bis 3, dadurch gekennzeichnet, dass der Magnet (2) oberhalb der Saugöffnung (4) und durch einen Abschnitt (3) von dieser getrennt angeordnet ist.

6. Haltevorrichtung nach einem der Ansprüche 1 bis 5, dadurch gekennzeichnet, dass im Saugnapf an der der Saugöffnung gegenüberliegenden Seite, parallel zu dieser, durch einen Abschnitt (3) vom Magneten getrennt, eine Platte, mit oder ohne Gewindebohrung, angeordnet ist, um einen Stab zu befestigen.

7. Haltevorrichtung nach einem der Ansprüche 1 bis 5, dadurch gekennzeichnet, dass im Saugnapf an der der Saugöffnung gegenüberliegenden Seite, mit dem Magneten direkt verbunden, eine Platte, mit oder ohne Gewinde bohrung, angeordnet ist, um einen Stab zu befestigen.

8. Haltevorrichtung nach einem der Ansprüche 1 bis 6, dadurch gekennzeichnet, dass im Magnet (2) an der der Saugöffnung (4) gegenüberliegenden Seite eine Vertiefung (5) vorgesehen ist, um einen Stab zu befestigen.

9. Haltevorrichtung nach einem der Ansprüche 1 bis 8, dadurch gekennzeichnet, dass der Querschnitt der Saugöffnung (4) des Saugnapfes parallel zur Polfläche des Magneten, rund, rechteckig, vieleckig oder oval ist.

10. Haltevorrichtung nach einem der Ansprüche 1 bis 9, dadurch gekennzeichnet, dass mindestens ein Durchgangsloch (6) im Magneten (2) vorhanden ist, das sich rechtwinklig zu den Polflächen erstreckt, um eine Verbindung zwischen den die Polflächen bedeckenden Abschnitten herzustellen.

11. Haltevorrichtung nach einem der Ansprüche 1 bis 9, dadurch gekennzeichnet dass die zweite Polfläche des am Boden (3) des Saugnapfes befestigten Magneten freiliegt.

12. Haltevorrichtung nach einem der Ansprüche 1 bis 10, dadurch gekennzeichnet, dass der Saugnapf (1) zwei Saugöffnungen (4, 4a) aufweist, und dass der Magnet (2) zwischen den Saugöffnungen so angeordnet sind, dass die Polflächen des Magneten jeweils durch einen den Boden der Saugöffnung bildenden Abschnitt von dieser getrennt sind.

13. Haltevorrichtung nach einem der Ansprüche 1 bis 12, dadurch gekennzeichnet, dass am Saugnapfrand (10) mindestens eine Lasche (11) einstückig angeformt ist.

14. Haltevorrichtung nach Anspruch 13, dadurch gekennzeichnet, dass am Saugnapfrand (10) eine ganz oder teilweise umlaufende Lasche (11) angeformt ist.

15. Haltevorrichtung nach einem der Ansprüche 13 oder 14, dadurch gekennzeichnet, dass die Lasche (11) am freien Ende eine Verdickung (12) aufweist.

Fig.1

Fig.2

Fig.3

Fig.4

Fig.5

0 276 830

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-U-7 527 324  (HYLLA)<br>* ganzes Dokument * | 1-3,5 | F 16 B  47/00 |
| A |  | 9 |  |
| A | US-A-3 879 005  (FLICK)<br>* Figuren 1, 2; Zusammenfassung *<br>--- | 1,12 |  |
| A | US-A-3 168 276  (SCHNEIDER)<br>* Anspruch 1; Figur 2 *<br>----- | 1,6-8 |  |

| RECHERCHIERTE SACHGEBIETE (Int. Cl.4) |
|---|
| F 16 B  47/00 |

Der vorliegende Recherchenbericht wurde für alle Patentansprüche erstellt

| Recherchenort | Abschlußdatum der Recherche | Prüfer |
|---|---|---|
| BERLIN | 23-03-1988 | SCHAEFFLER C.A.A. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
 
& : Mitglied der gleichen Patentfamilie, übereinstimmendes
    Dokument

EPO FORM 1503 03.82 (P0403)